# EUROPEAN PATENT APPLICATION

(11) **EP 4 632 534 A1**
(43) Date of publication of application: **15.10.2025**
(21) Application number: 23925697.7
(22) Date of filing: 06.03.2023
(51) Int. Cl.: G06F 3/01

(54) **HAPTIC RENDERING SYSTEM AND HAPTIC RENDERING METHOD**

(71) Applicant: Boe Technology Group Co., Ltd., Beijing 100015 (CN)
(72) Inventor: WANG, He, Beijing 100176 (CN); CHEN, Yuju, Beijing 100176 (CN); WANG, Yingzi, Beijing 100176 (CN)
(74) Representative: Brötz, Helmut
(86) International application number: PCT/CN2023/079844
(87) International publication number: WO 2024/182972

(57) **Abstract**

A haptic rendering system and a haptic rendering method. The haptic rendering system comprises a display panel, a touch structure, a piezoelectric actuator, and a control module; the touch structure is located on the display panel and is configured to detect a touch position of a touch operation; the piezoelectric actuator is located on the display panel; the control module is communicationally connected to the display panel, the touch structure, and the piezoelectric actuator, separately; and the control module is configured to extract the touch position detected by the touch structure, determine a touch mode of the touch operation according to a change in the touch position, and output different driving voltages to the piezoelectric actuator according to the touch mode, so that the piezoelectric actuator drives the display panel to generate different vibrations, thereby achieving different haptic rendering effects. Therefore, the haptic rendering system can improve the realism of human-computer interaction and the immersive experience of a user.

## Description

### TECHNICAL FIELD

Embodiments of the present disclosure relate to a tactile reproduction system and a tactile reproduction method.

### BACKGROUND

The main ways in which humans perceive the world include visual, auditory, and tactile ways. Compared to visual and auditory ways, the flow of tactile information is bidirectional, providing a two-way interaction channel between humans and devices, which is more in line with the concept of human-computer interaction.

The tactile reproduction technology combines a tactile reproduction device with computer simulations, to enables users to perceive, manipulate, and touch things in a virtual environment. With the help of tactile reproduction technology, electronic device manufacturers can create unique and personalized tactile feedback for specific interactive experiences on their devices, providing consumers with more valuable and realistic unique experiences.

### SUMMARY

In order to detect and determine different modes of a touch operation to change the tactile effect and improve the authenticity of human-computer interaction, at least one embodiment of the present disclosure provides a tactile reproduction system, which includes: a display panel; a touch structure, on the display panel and configured to detect a touch position of a touch operation; a piezoelectric actuator, on the display panel; and a control module, respectively connected to the display panel, the touch structure, and the piezoelectric actuator in communication, the control module is configured to extract the touch position detected by the touch structure, determine a touch mode of the touch operation according to a change of the touch position, and output different driving voltages to the piezoelectric actuator according to the touch mode to drive the display panel to generate different vibrations, thereby achieving different tactile reproduction effects.

For example, the tactile reproduction system provided by an embodiment of the present disclosure further includes: a first pressure sensor, on the display panel and configured to detect a touch pressure of the touch operation, the control module is further connected to the first pressure sensor in communication and configured to extract the touch pressure detected by the first pressure sensor, and determine the touch mode of the touch operation according to the change of the touch position and the touch pressure.

For example, in the tactile reproduction system provided by an embodiment of the present disclosure, the control module is further configured to compare a magnitude of the touch pressure with a preset pressure threshold to determine whether the touch operation is a false touch.

For example, in the tactile reproduction system provided by an embodiment of the present disclosure, in a case that the control module detects that a trajectory formed by the touch position is a straight line, and a change of the touch pressure is within a first preset range, the control module determines that the touch operation is in a sliding mode.

For example, in the tactile reproduction system provided by an embodiment of the present disclosure, the control module is configured to: divide a first sliding region on the display panel; store a first touch position, detected by the touch structure, in the first sliding region, and use the first touch position as an initial position, then extract a touch position, detected by the touch structure, in the first sliding region every first time period, and use the touch position as a subsequent position; calculate a horizontal offset between the subsequent position and the initial position, and in a case that the horizontal offset is less than a preset horizontal offset, determine that the touch operation is in a sliding mode.

For example, in the tactile reproduction system provided by an embodiment of the present disclosure, the control module is configured to: divide a first sliding region on the display panel; divide the first sliding region into a plurality of sub sliding regions sequentially arranged; store a first touch position, detected by the touch structure, in the first sliding region, and use the first touch position as an initial position; then extract a touch position, detected by the touch structure, in the first sliding region every second time period, and use the touch position as a subsequent position; determine whether one of plurality of sub sliding regions where the subsequent position is located is adjacent to one of plurality of sub sliding regions where the initial position is located, if so, determine that the touch operation is in a sliding mode.

For example, in the tactile reproduction system provided by an embodiment of the present disclosure, the control module is configured to determine that the sliding mode ends after detecting that the touch position is outside the first sliding region.

For example, in the tactile reproduction system provided by an embodiment of the present disclosure, the control module outputs a high-frequency driving voltage to the piezoelectric actuator according to the sliding mode to allow the display panel to generate a high-frequency vibration, thereby achieving a tactile effect corresponding to a sliding bar, a value of a frequency of the high-frequency driving voltage ranges from 20 kHz to 30 kHz.

For example, in the tactile reproduction system provided by an embodiment of the present disclosure, in a case that the control module detects that a trajectory formed by the touch position is an arc line, and a change of the touch pressure is within a second preset range, the control module determines that the touch operation is in a rotary mode.

For example, in the tactile reproduction system provided by an embodiment of the present disclosure, the control module is configured to: divide a second sliding region on the display panel, the second sliding region is in a circle shape which includes a center; store a first touch position, detected by the touch structure, in the second sliding region, and use the first touch position as an initial position, calculate an initial angle between a line connecting the initial position and the center of the circle shape and a reference line; then extract a touch position, detected by the touch structure, in the first sliding region every third time period, and use the touch position as a subsequent position; calculate a subsequent angle between a line connecting the subsequent position and the center of the circle shape and a reference line; calculate an angle difference between the subsequent angle and the initial angle, in a case that the angle difference is greater than a preset angle value, determine that the touch operation is in a rotary mode.

For example, in the tactile reproduction system provided by an embodiment of the present disclosure, the control module is configured to determine that the rotary mode ends after detecting that the touch position is outside the second sliding region.

For example, in the tactile reproduction system provided by an embodiment of the present disclosure, the control module outputs a high-frequency driving voltage to the piezoelectric actuator according to the sliding mode to allow the display panel to generate a high-frequency vibration, thereby achieving a tactile effect corresponding to a knob, a value of a frequency of the high-frequency driving voltage ranges from 20 kHz to 30 kHz.

For example, in the tactile reproduction system provided by an embodiment of the present disclosure, the control module is configured to divide a pressing region on the display panel; extract the touch position detected by the touch structure and determine whether the touch position is in the pressing region; if the touch position is in the pressing region and the touch pressure is greater than a preset pressure value, determine that the touch operation is in a strong pressing mode.

For example, in the tactile reproduction system provided by an embodiment of the present disclosure, the preset pressure value includes a plurality of pressure levels of different magnitudes, and the control module is configured to determine a magnitude relationship between the touch pressure and the plurality of pressure levels to determine a level of the strong pressing mode.

For example, in the tactile reproduction system provided by an embodiment of the present disclosure, the control module outputs a low-frequency driving voltage to the piezoelectric actuator according to the sliding mode to allow the display panel to generate a low-frequency vibration, thereby achieving a tactile effect corresponding to a button, a value of a frequency of the low-frequency driving voltage ranges 200 Hz to 300 Hz.

For example, the tactile reproduction system provided by an embodiment of the present disclosure further includes: a second pressure sensor, on the display panel and configured to detect a vibration of the display panel and convert the vibration into a vibration signal; and a closed-loop feedback controller, respectively connected to the second pressure sensor and the control module in communication, the closed-loop feedback controller is configured to extract the vibration signal detected by the second pressure sensor, compare the vibration signal with a reference signal, and feedback a comparison result to the control module to change a driving voltage, the reference signal is a standard vibration signal of a tactile reproduction effect corresponding to the touch mode.

For example, in the tactile reproduction system provided by an embodiment of the present disclosure, the control module is further configured to output a display signal to the display panel according to the touch mode to increase a visual reproduction effect.

For example, the tactile reproduction system provided by an embodiment of the present disclosure further includes: a speaker, the control module is connected to the speaker in communication, and the control module is further configured to output an audio signal to the speaker according to the touch mode to increase an auditory reproduction effect.

For example, in the tactile reproduction system provided by an embodiment of the present disclosure, the control module includes: a data processor; and a field programmable logic gate array, the data processor is configured to extract the touch position detected by the touch structure, determine the touch mode according to the touch position, and output a control signal to the field programmable logic gate array according to the touch mode; the field programmable logic gate array calls driving voltages corresponding to the different tactile reproduction effects in a pre-stored driving voltage library according to the control signal, and outputs the driving voltages to the piezoelectric actuator to achieve the different tactile reproduction effects.

For example, the tactile reproduction system provided by an embodiment of the present disclosure further includes: an analog to digital converter, including an input terminal and an output terminal; an operational amplifier, including an input terminal and an output terminal; and a digital to analog converter, including an input terminal and an output terminal, the input terminal of the analog to digital converter is connected to the touch structure in communication, and the output terminal of the analog to digital converter is connected to the data processor in communication; the input terminal of the digital to analog converter is connected to the field programmable logic gate array, the output terminal of the digital to analog converter is connected to the input terminal of the operational amplifier, and the output terminal of the operational amplifier is connected to the piezoelectric actuator.

At least one embodiment of the present disclosure further provides a tactile reproduction method, which includes: detecting a touch position of a touch operation through a touch structure on a display panel; determining a touch mode of the touch operation according to a change of the touch position; and outputting different driving voltages to a piezoelectric actuator according to the touch mode to drive the display panel to generate different vibrations, thereby achieving different tactile reproduction effects.

For example, the tactile reproduction method provided by an embodiment of the present disclosure further includes: detecting a touch pressure of the touch operation through a first pressure sensor on the display panel, the determining the touch mode of the touch operation through the change of the touch position includes: determining the touch mode according to the change of the touch position and the touch pressure.

For example, in the tactile reproduction method provided by an embodiment of the present disclosure, the determining the touch mode according to the change of the touch position and the touch pressure includes: in a case that a trajectory formed by the touch position is a straight line and a change of the touch pressure is within a first preset range, determining that the touch operation is in a sliding mode.

For example, in the tactile reproduction method provided by an embodiment of the present disclosure, the determining the touch mode according to the change of the touch position and the touch pressure includes: dividing a first sliding region on the display panel; storing a first touch position, detected by the touch structure, in the first sliding region, and using the first touch position as an initial position; extracting a touch position, detected by the touch structure, in the first sliding region every first time period, and using the touch position as a subsequent position; and calculating a horizontal offset between the subsequent position and the initial position, and in a case that the horizontal offset is less than a preset horizontal offset, determining that the touch operation is in a sliding mode.

For example, in the tactile reproduction method provided by an embodiment of the present disclosure, the determining the touch mode according to the change of the touch position and the touch pressure includes: dividing a first sliding region on the display panel; dividing the first sliding region into a plurality of sub sliding regions sequentially arranged; storing a first touch position, detected by the touch structure, in the first sliding region, and using the first touch position as an initial position; extracting a touch position, detected by the touch structure, in the first sliding region every second time period, and using the touch position as a subsequent position; determining whether one of the plurality of sub sliding regions where the subsequent position is located is adjacent to one of the plurality of sub sliding regions where the initial position is located, if so, determining that the touch operation is in a sliding mode.

For example, the tactile reproduction method provided by an embodiment of the present disclosure further includes: determining that the sliding mode ends after detecting that the touch position is outside the first sliding region.

For example, in the tactile reproduction method provided by an embodiment of the present disclosure, the outputting different driving voltages to the piezoelectric actuator according to the touch mode to drive the display panel to generate different vibrations, thereby achieving different tactile reproduction effects includes: according to the sliding mode, outputting a high-frequency driving voltage to the piezoelectric actuator to allow the display panel to generate a high-frequency vibration, thereby achieving a tactile effect corresponding to a sliding bar, a value of a frequency of the high-frequency driving voltage ranges 20 kHz to 30 kHz.

For example, in the tactile reproduction method provided by an embodiment of the present disclosure, the determining the touch mode according to the change of the touch position and the touch pressure includes: in a case that a trajectory formed by the touch position is detected as an arc line, and a change of the touch pressure is within a second preset range, determining that the touch operation is in a rotary mode.

For example, in the tactile reproduction method provided by an embodiment of the present disclosure, the determining the touch mode according to the change of the touch position and the touch pressure includes: dividing a second sliding region on the display panel, the second sliding region is in a circle shape which includes a center; storing a first touch position, detected by the touch structure, in the second sliding region, and using the first touch position as an initial position; calculating an initial angle between a line connecting the initial position and the center of the circle shape and a reference line; extracting a touch position, detected by the touch structure, in the first sliding region every third time period, and using the touch position as a subsequent position; calculating a subsequent angle between a line connecting the subsequent position and the center of the circle shape and a reference line; calculating an angle difference between the subsequent angle and the initial angle, in a case that the angle difference is greater than a preset angle value, determining that the touch operation is in a rotary mode.

For example, the tactile reproduction method provided by an embodiment of the present disclosure further includes: determining that the rotary mode ends after detecting that the touch position is outside the second sliding region.

For example, in the tactile reproduction method provided by an embodiment of the present disclosure, the outputting different driving voltages to the piezoelectric actuator according to the touch mode to drive the display panel to generate different vibrations, thereby achieving different tactile reproduction effects includes: according to the sliding mode, outputting a high-frequency driving voltage to the piezoelectric actuator to allow the display panel to generate a high-frequency vibration, thereby achieving a tactile effect corresponding to a knob, a value of a frequency of the high-frequency driving voltage ranges from 20 kHz to 30 kHz.

For example, in the tactile reproduction method provided by an embodiment of the present disclosure, the determining the touch mode according to the change of the touch position and the touch pressure includes: dividing a pressing region on the display panel; extracting the touch position detected by the touch structure and determining whether the touch position is in the pressing region; if the touch position is in the pressing region and the touch pressure is greater than a preset pressure value, determining that the touch operation is in a strong pressing mode.

For example, in the tactile reproduction method provided by an embodiment of the present disclosure, the preset pressure value includes a plurality of pressure levels of different magnitudes, and the control module is configured to determine a magnitude relationship between the touch pressure and the plurality of pressure levels to determine a level of the strong pressing mode.

For example, in the tactile reproduction method provided by an embodiment of the present disclosure, the outputting different driving voltages to the piezoelectric actuator according to the touch mode to drive the display panel to generate different vibrations, thereby achieving different tactile reproduction effects includes: according to the sliding mode, outputting a low-frequency driving voltage to the piezoelectric actuator to allow the display panel to generate a low-frequency vibration, thereby achieving a tactile effect corresponding to a button, a value of a frequency of the low-frequency driving voltage ranges from 200 Hz to 300 Hz.

For example, the tactile reproduction method provided by an embodiment of the present disclosure further includes: compare a magnitude of the touch pressure with a preset pressure threshold to determine whether the touch operation is a false touch.

For example, the tactile reproduction method provided by an embodiment of the present disclosure further includes: detecting a vibration of the display panel and converting the vibration into a vibration signal by a second pressure sensor on the display panel; and comparing the vibration signal with a reference signal, and changing a driving voltage according to a comparison result, the reference signal is a standard vibration signal of a tactile reproduction effect corresponding to the touch mode.

For example, the tactile reproduction method provided by an embodiment of the present disclosure further includes: outputting a display signal to the display panel according to the touch mode to increase a visual reproduction effect.

For example, the tactile reproduction method provided by an embodiment of the present disclosure further includes: outputting an audio signal to a speaker according to the touch mode to increase an auditory reproduction effect.

### BRIEF DESCRIPTION OF DRAWINGS

In order to more clearly explain the technical solution of the embodiments of the present disclosure, the accompanying drawings of the embodiments will be briefly introduced below. Obviously, the accompanying drawings in the following description only relate to some embodiments of the present disclosure, and are not limited to the present disclosure.
Fig. 1 is a schematic diagram of a tactile reproduction system provided by an embodiment of the present disclosure;
Fig. 2 is a flowchart of a tactile reproduction system determining a touch mode provided by an embodiment of the present disclosure;
Fig. 3 is a flowchart of another tactile reproduction system determining a touch mode provided by an embodiment of the present disclosure;
Fig. 4 is a flowchart of another tactile reproduction system determining a touch mode provided by an embodiment of the present disclosure;
Fig. 5 is a flowchart of another tactile reproduction system determining a touch mode provided by an embodiment of the present disclosure;
Fig. 6 is a schematic diagram of another tactile reproduction system provided by an embodiment of the present disclosure; and
Fig. 7 is a flowchart of a tactile reproduction method provided by an embodiment of the present disclosure.

### DETAILED DESCRIPTION

In order to make the purpose, technical solution and advantages of the embodiments of the present disclosure clearer, the technical solution of the embodiments of the present disclosure will be described clearly and completely with the accompanying drawings. Obviously, the described embodiments are a part of the embodiments of the present disclosure, not the whole embodiments. Based on the described embodiments of the present disclosure, all other embodiments obtained by ordinary skilled in the field without creative labor belong to the scope of protection of the present disclosure.

Unless otherwise defined, technical terms or scientific terms used in the present disclosure shall have their ordinary meanings as understood by people with ordinary skills in the field to which the present disclosure belongs. The terms "first", "second" and the like used in the present disclosure do not indicate any order, quantity or importance, but are only used to distinguish different components. Similar words such as "including" or "comprising" mean that the elements or objects appearing before the word cover the elements or objects listed after the word and their equivalents, without excluding other elements or objects. Similar words such as "connecting" or "connected" are not limited to physical or mechanical connection, but can include electrical connection, whether direct or indirect.

Unless otherwise defined, the features such as "parallel", "vertical", and "identical" used in the embodiments of the present disclosure all include strictly defined cases such as "parallel", "vertical", "identical", as well as cases, such as "roughly parallel", "roughly vertical", "roughly identical", etc., which contain certain errors. For example, the above "roughly" can indicate that the difference between compared objects is 10% of the average value of the compared objects, or within 5%. When the quantity of a component or element is not specifically specified in the following text of the embodiments of the present disclosure, it means that the component or element can be one or multiple/a plurality, or can be understood as at least one. "At least one" refers to one or more, and "multiple/a plurality" refers to at least two.

The general tactile reproduction system can only generate a single vibration tactile feedback effect according to a touch, and cannot detect and determine different modes of a touch operation to change the tactile effect. On the other hand, in order to improve the authenticity of human-computer interaction, it is needed to reproduce different tactile effects according to the user's different touch modes, such as the boundary sensation and pressing sensation of a button, the sliding sensation of a knob and a progress bar.

In this regard, the embodiments of the present disclosure provide a tactile reproduction system and a tactile reproduction method. The tactile reproduction system includes a display panel, a touch structure, a piezoelectric actuator, and a control module, the touch structure is on the display panel and configured to detect a touch position of a touch operation; the piezoelectric actuator is on the display panel and configured to generate a vibration; and the control module is respectively connected to the display panel, the touch structure, and the piezoelectric actuator in communication, the control module is configured to extract the touch position detected by the touch structure, determine a touch mode of the touch operation according to a change of the touch position, and output different driving voltages to the piezoelectric actuator according to the touch mode to drive the display panel to generate different vibrations, thereby achieving different tactile reproduction effects. Therefore, the tactile reproduction system extracts the touch position detected by the touch structure, determines the touch mode of the touch operation according to the change of the touch position, and then achieves different tactile reproduction effects according to the touch mode, thereby improving the authenticity of human-computer interaction and the user's immersive experience.

Hereinafter, the tactile reproduction system and tactile reproduction method provided by the embodiments of the present disclosure will be described in detail in conjunction with the accompanying drawings.

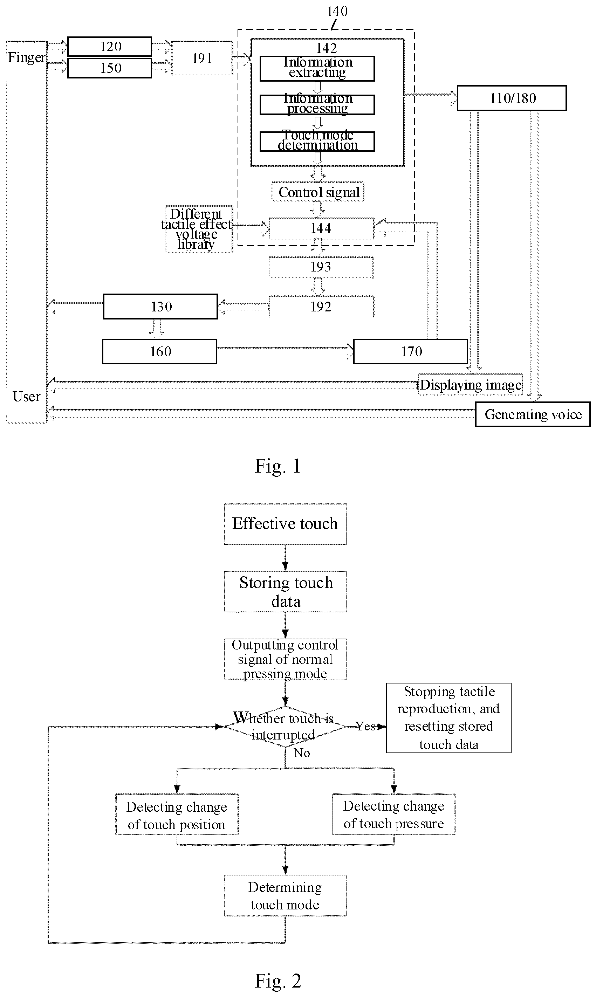

An embodiment of the present disclosure provides a tactile reproduction system. Fig. 1 is a schematic diagram of a tactile reproduction system provided by an embodiment of the present disclosure.

As illustrated by Fig. 1, the tactile reproduction system 100 includes a display panel 110, a touch structure 120, a piezoelectric actuator 130, and a control module 140. The touch structure 120 is provided on the display panel 110 and configured to detect a touch position of a touch operation; the piezoelectric actuator 130 is provided on the display panel 110; the control module 140 is connected to the display panel 110, the touch structure 120, and the piezoelectric actuator 130 in communication; the control module 140 is configured to extract the touch position detected by the touch structure 120, determine the touch mode of the touch operation according to the change of the touch position, and output different driving voltages to the piezoelectric actuator 130 according to the touch mode, to allow the display panel 110 to generate different vibrations, thereby achieving different tactile reproduction effects. It should be noted that the above "connected in communication" includes both wired connections (such as wires, optical fibers, etc.) and wireless connections (such as Wi-Fi, mobile networks).

In the tactile reproduction system provided by the embodiments of the present disclosure, by extracting the touch position detected by the touch structure, the touch mode of the touch operation is determined according to the change of the touch position, and then different tactile reproduction effects are achieved according to the touch mode, thereby improving the authenticity of human-machine interaction and the user's immersive experience.

In some examples, as illustrated by Fig. 1, the tactile reproduction system 100 further includes a first pressure sensor 150 provided on the display panel 110. The first pressure sensor 150 is configured to detect a touch pressure of the touch operation. The control module 140 is further connected to the first pressure sensor 150 in communication and configured to extract the touch pressure detected by the first pressure sensor 150, and determine the touch mode of the touch operation according to the change of the touch position and the touch pressure. Therefore, the tactile reproduction method can recognize more types of touch modes through the touch pressure, thereby providing a richer tactile reproduction effect.

In some examples, as illustrated by Fig. 1, the control module 140 is further configured to compare a magnitude of the touch pressure with a preset pressure threshold to determine whether the touch operation is a false touch. Therefore, the visual reproduction system can determine whether the user's touch operation is an effective touch and avoid the false touch.

For example, the first preset pressure threshold can be set; in the case that the touch pressure is less than the first preset pressure threshold, it is determined that the touch operation is a false touch; in the case that the touch pressure is greater than the first preset pressure threshold, it is determined that the touch operation is an effective touch.

For example, a first preset pressure threshold and a second preset pressure threshold can also be set, the second preset pressure threshold is greater than the first preset pressure threshold. In the case that the touch pressure is less than the first preset pressure threshold, it is determined that the touch operation is a false touch; in the case that the touch pressure is greater than the second preset pressure threshold, it is determined that the touch operation is a false touch; in the case that the touch pressure is between the first preset pressure threshold and the second preset pressure threshold, it is determined that the touch operation is an effective touch.

In some examples, the above touch structure may be a capacitive touch structure. Of course, the embodiments of the present disclosure include but are not limited thereto, and the above touch structure may also include other types of touch structures.

In some examples, as illustrated by Fig. 1, the tactile reproduction system 100 further includes a second pressure sensor 160 and a closed-loop feedback controller 170; the second pressure sensor 160 is provided on the display panel 110 and is configured to detect the vibration of the display panel 110 and convert the above vibration into a vibration signal, such as a voltage signal; the closed-loop feedback controller 170 is respectively connected to the second pressure sensor 160 and the control module 140 in communication; the closed-loop feedback controller 170 is configured to extract the vibration signal detected by the second pressure sensor 160, compare the vibration signal with a reference signal, and feedback the comparison result to the control module 140 to change the driving voltage. For example, the reference signal can be a standard vibration signal of a tactile reproduction effect corresponding to the touch mode. Therefore, the tactile reproduction system can form a closed-loop feedback through the second pressure sensor and the closed-loop feedback controller to accurately control the tactile reproduction effect, thereby improving the user experience. It should be noted that the pressure of the touch operation may cause the resonance frequency point of the vibration to shift, and the tactile reproduction effect can be corrected through the closed-loop feedback.

For example, the control module can store driving voltages and standard vibration signals corresponding to different tactile reproduction effects; in the case that the control module determines a tactile reproduction effect and outputs a driving voltage corresponding to the tactile reproduction effect to the piezoelectric actuator, because of various reasons, the actual vibration generated by the display panel differs from the standard vibration corresponding to the tactile reproduction effect, by comparing the above vibration signal with the reference signal, the tactile reproduction system can correct the driving voltage, make the actual vibration generated the same as the standard vibration corresponding to the tactile reproduction effect.

In some examples, as illustrated by Fig. 1, the control module 140 is further configured to output a display signal to the display panel 110 according to the touch mode to improve the visual reproduction effect. Therefore, the tactile reproduction system can further improve the user experience.

In some examples, as illustrated by Fig. 1, the tactile reproduction system 100 further includes a speaker 180, the control module 140 is connected to the speaker 180 in communication, and the control module 140 is configured to output an audio signal to the speaker 180 according to the touch mode to improve the auditory reproduction effect. Therefore, the tactile reproduction system can further improve the user experience.

In some examples, the first pressure sensor 150 and the second pressure sensor 160 mentioned above may be the same pressure sensor. For example, the pressure sensor can be used in a time-sharing manner, to detect the touch pressure as the first pressure sensor 150 in a first time period, and to detect the vibration of the display panel 110 as the second pressure sensor 160 in a second time period.

In some examples, as illustrated by Fig. 1, the control module 140 includes a data processor 142 and a field programmable logic gate array (FPGA) 144; the data processor 142 is configured to extract the touch position detected by the touch structure 120 and the touch pressure detected by the first pressure sensor 150, determine the touch mode according to the touch position and the touch pressure, and output a control signal to the field programmable logic gate array 144 according to the touch mode; the field programmable logic gate array 144 calls the driving voltages corresponding to different tactile reproduction effects in the pre-stored driving voltage library according to the control signal, and outputs the driving voltages to the piezoelectric actuator 130 to achieve different tactile reproduction effects. Therefore, the tactile reproduction system can improve processing efficiency, reduce latency, and improve user experience by combining the data processor and the field programmable logic gate array.

For example, the above driving voltage library may include driving voltages corresponding to different tactile reproduction effects and standard vibration signals corresponding to different tactile reproduction effects.

For example, the data processor 142 may be a central processing unit (CPU). Of course, the embodiments of the present disclosure include but is not limited thereto.

In some examples, as illustrated by Fig. 1, the tactile reproduction system 100 further includes an analog to digital converter (ADC) 191, an operational amplifier 192, and a digital to analog converter (DAC) 193; the analog to digital converter 191 includes an input terminal and an output terminal, the operational amplifier 192 includes an input terminal and an output terminal, and the digital to analog converter 193 includes an input terminal and an output terminal; the input terminal of the analog-to-digital converter 191 is connected to the touch structure 120 in communication, and the output terminal of the analog to digital converter 191 is connected to the data processor 142 in communication; the input terminal of the digital to analog converter 193 is connected to the field programmable logic gate array 144, the output terminal of the digital to analog converter 193 is connected to the input terminal of the operational amplifier 192, and the output terminal of the operational amplifier 192 is connected to the piezoelectric actuator 130.

Fig. 2 is a flowchart of a tactile reproduction system determining a touch mode provided by an embodiment of the present disclosure. As illustrated by Fig. 2, first, the data processor extracts the touch position detected by the touch structure and the touch pressure detected by the first pressure sensor; the touch position can assign coordinates to a pixel on the display panel, so that the coordinates (x, y) of the pressing position on the display panel can be obtained according to the touch position detected by the touch structure, and the pressure value F can be obtained according to the touch pressure detected by the first pressure sensor; then, the data processor can determine a magnitude relationship between the pressure value F of the touch pressure and the preset pressure threshold to determine whether the user performs an effective touch.

For example, the preset pressure threshold mentioned above may include a first preset pressure threshold; in the case that the pressure value F of the touch pressure is less than the first preset pressure threshold, it is determined that the touch operation is a false touch; in the case that the touch pressure is greater than the first preset pressure threshold, it is determined that the touch operation is an effective touch.

For example, the above preset pressure threshold may include a first preset pressure threshold and a second preset pressure threshold, the second preset pressure threshold is greater than the first preset pressure threshold; in the case that the pressure value F of the touch pressure is less than the first preset pressure threshold, it is determined that the touch operation is a false touch; in the case that the pressure value F of the touch pressure is greater than the second preset pressure threshold, it is determined that the touch operation is a false touch; in the case that the touch pressure is between the first preset pressure threshold and the second preset pressure threshold, it is determined that the touch operation is an effective touch.

After determining the touch operation as the effective touch, the data processor can store the coordinates (x₀, y₀) of the pressing position and the pressure value F₀ at this time, that is, store the touch data, and output a control signal corresponding to the normal pressing mode (i.e. touch mode) to the FPGA, to allow the FPGA to output a low-frequency excitation signal (i.e. low-frequency driving voltage), so as to allow the piezoelectric actuator (such as piezoelectric ceramics) to drive the display panel to generate a vibration, thereby achieving the tactile reproduction effect corresponding to the pressing operation. It should be noted that the above coordinates can be the coordinates of the pressing position on the display panel. For example, the frequency of the above low-frequency driving voltage is less than 1 kHz.

Then, the data processor continues to receive the touch position and the touch pressure respectively detected by the touch structure and the first pressure sensor, and determines whether the touch operation is interrupted; if the touch operation is interrupted, the FPGA will stop outputting the excitation signal and reset the stored touch data, waiting for the next effective touch; if the touch operation is not interrupted, then simultaneously detect and determine whether the pressing position (x, y) and pressure value F have changed, and combine the changes of the pressing position (x, y) and the pressure value F to determine the touch mode of the touch operation, then, output different control signals according to different touch modes, control the FPGA to output excitation signals of different frequencies and amplitudes to the piezoelectric actuator, so that the piezoelectric actuator drives the display panel to generate different vibrations, thereby generating different tactile reproduction effects.

In some examples, in the case that a trajectory formed by the touch position is a straight line, the control module can determine that the current touch operation is in a sliding mode; in the case that a trajectory formed by the touch position is an arc line, the control module can determine that the current operation is in a rotary mode; in the case that the touch position remains unchanged and the touch pressure increases, the control module determines that the touch operation is in a strong pressing mode. In the following, the touch mode determination of the control module will be described in detail through several examples.

In some examples, in the case that the control module detects that the trajectory formed by the touch position is a straight line and the change of the touch pressure is within the first preset range, the control module determines that the touch operation is in a sliding mode. It should be noted that the first preset range can be set according to the actual situation, and the above first preset range refers to the change of the touch pressure, instead of an absolute pressure value.

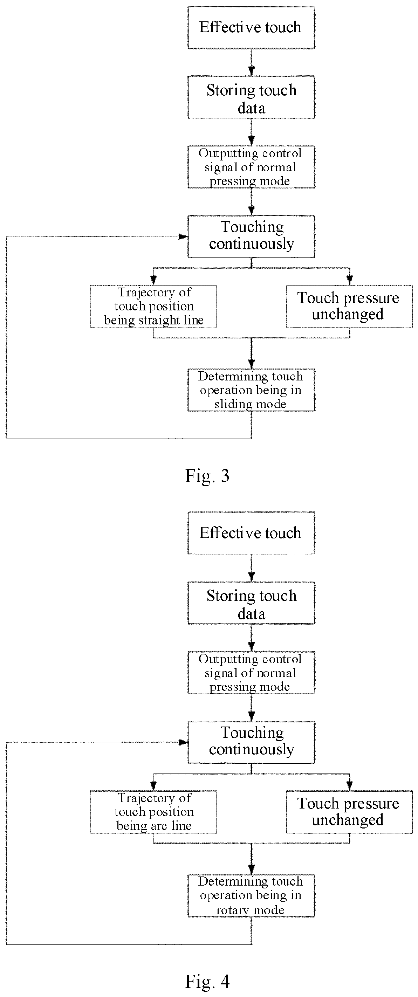

Fig. 3 is a flowchart of another tactile reproduction system determining a touch mode provided by an embodiment of the present disclosure. As illustrated by Fig. 3, in the case that the user continuously slides and touches, the touch structure and the first pressure sensor at the user's touch position continuously output the effective touch position and touch pressure. The data processor extracts the above touch position and touch pressure in real time and compares them with the initial stored data. **In** the case that the trajectory formed by the touch position is detected to be a straight line or roughly a straight line, and the change of the touch pressure is within the first preset range, the data processor determines that the touch operation is in a sliding mode.

Then, according to the above determination result, the data processor can output a control signal corresponding to the sliding mode to the FPGA, the FPGA calls a high-frequency excitation signal (i.e. high-frequency driving voltage) corresponding to the sliding mode in the pre-stored driving voltage library according to the control signal, and outputs the high-frequency excitation signal to the piezoelectric actuator to allow the piezoelectric actuator to drive the display panel to vibrate, thereby enabling the user to generate the tactile effect corresponding to a sliding bar. It should be noted that the above sliding mode may be the sliding mode corresponding to a progress bar or the like.

In some examples, the control module is configured to divide a first sliding region on the display panel, in which the first sliding region may be in a stripe shape or a rectangle shape; store a first touch position, detected by the touch structure, in the first sliding region and use the first touch position as an initial position (x, y); then extract a touch position, detected by the touch structure, in the first sliding region every first time period, and use the touch position as a subsequent position (x1, y1); calculate a horizontal offset between the subsequent position (x1, y1) and the initial position (x, y); in the case that the horizontal offset is less than a preset horizontal offset, determine that the touch operation is in a sliding mode. It should be noted that the above sliding mode may be a sliding mode corresponding to a progress bar or the like.

Subsequently, the control module calls the high-frequency driving voltage corresponding to the sliding mode in the pre-stored driving voltage library according to the determined sliding mode, and outputs the high-frequency driving voltage to the piezoelectric actuator to allow the piezoelectric actuator to drive the display panel to generate a high-frequency vibration, thereby enabling the user to generate the tactile effect corresponding to a sliding bar. For example, a value of the frequency of the high-frequency driving voltage mentioned above ranges from 20 kHz to 30 kHz. **In** the case that the control module detects that the touch position is outside the first sliding region, the control module determines that the sliding mode ends and can stop outputting the high-frequency driving voltage to the piezoelectric actuator, and switch to outputting the low-frequency driving voltage corresponding to the normal pressing mode.

For example, the value of the high-frequency driving voltage value mentioned above ranges from 80V to 160V, such as 100V. Of course, the embodiments of the present disclosure include but are not limited thereto, the value range of the driving voltage mentioned above is determined according to the working voltage of the piezoelectric actuator. Therefore, when different piezoelectric actuators are used, the value range of the driving voltage mentioned above can be changed according to the actual situation.

Therefore, the control module can determine whether the trajectory of the touch operation is a straight line by determining the horizontal offset between the subsequent position and the initial position, thereby determining whether the touch operation is in a sliding mode. In addition, the control module can also perform the above determination process only in the first sliding region by dividing the first sliding region on the display panel, thereby reducing misjudgment while providing corresponding functions.

It should be noted that the initial position and the subsequent position mentioned above can be characterized by the coordinates on the display panel, and the horizontal offset can be obtained by calculating the coordinates of the initial position and subsequent position through a function. In addition, the preset horizontal offset mentioned above can be set according to the situation, for example, the preset horizontal offset may be smaller than the width of the first sliding region.

In some examples, the control module is further configured to: divide a first sliding region on the display panel; divide the first sliding region into a plurality of sub sliding regions sequentially arranged, such as A1, A2, A3, A4; store a first touch position, detected by the touch structure, in the first sliding region and use the first touch position as the initial position; then extract a touch position, detected by the touch structure, in the first sliding region every second time period, and use the touch position as the subsequent position; determine whether the sub sliding region where the subsequent position is located is adjacent to the sub sliding region where the initial position is located. If so, it is determined that the touch operation is in a sliding mode. For example, if the initial position is in A2 and the subsequent position is in A1 or A3, it can be determined that the current touch operation is in a sliding mode.

Subsequently, the control module calls the high-frequency driving voltage corresponding to the sliding mode in the pre-stored driving voltage library according to the determined sliding mode, and outputs the high-frequency driving voltage to the piezoelectric actuator to allow the piezoelectric actuator to drive the display panel to generate a high-frequency vibration, thereby enabling the user to generate the tactile effect corresponding to a sliding bar. For example, the value of the frequency of the high-frequency driving voltage mentioned above ranges from 20 kHz to 30 kHz. If the control module detects that the touch position is outside the first sliding region, the control module determines that the sliding mode ends and can stop outputting the high-frequency driving voltage to the piezoelectric actuator, and switch to outputting the low-frequency driving voltage corresponding to the normal pressing mode.

For example, the value of the high-frequency driving voltage values mentioned above ranges from 80V to 160V, such as 100V. Of course, the embodiments of the present disclosure include but are not limited thereto, the value range of the driving voltage mentioned above is determined according to the working voltage of the piezoelectric actuator. Therefore, when different piezoelectric actuators are used, the value range of the driving voltage mentioned above can be changed according to the actual situation.

Therefore, the control module can determine whether the touch operation is in the sliding mode by determining which sub sliding regions, in the first sliding region, the subsequent position and the initial position are in. In addition, the control module can also perform the above determination process only in the first sliding region by dividing the first sliding region on the display panel, thereby reducing misjudgment while providing corresponding functions.

In some examples, in the case that the control module detects that the trajectory formed by the touch position is an arc line, and the change of the touch pressure is within the second preset range, the control module determines that the touch operation is in a rotary mode. For example, the second preset range and the first preset range mentioned above can be the same. Of course, the embodiments of the present disclosure include but are not limited thereto, and the second preset range and the first preset range mentioned above may also be different.

Fig. 4 is a flowchart of another tactile reproduction system determining a touch mode provided by an embodiment of the present disclosure. As illustrated by Fig. 4, when the user rotates and slides, the touch structure and the first pressure sensor at the user's touch position continuously output the effective touch position and touch pressure. The data processor extracts the above touch position and touch pressure in real time and compares them with the initial stored data. In the case that the trajectory formed by the touch position is detected as an arc line (the arc line in the embodiments of the present disclosure may include a circle), and the change of the touch pressure is within the second preset range, the data processor determines that the touch operation is in a rotary mode.

Then, according to the above determination result, the data processor can output a control signal corresponding to the rotary mode to the FPGA, the FPGA calls the driving voltage corresponding to the rotary mode in the pre-stored driving voltage library according to the control signal, and outputs the driving voltage to the piezoelectric actuator to allow the piezoelectric actuator to drive the display panel to vibrate, thereby enabling the user to generate the corresponding tactile effect. It should be noted that the rotary mode may correspond to the touch mode such as rotating a button.

In some examples, the control module is configured to: divide a second sliding region on the display panel, in which the second sliding region is in a circle shape which includes a center; store a first touch position, detected by the touch structure, in the second sliding region and use the first touch position as an initial position (x, y); calculate an initial angle w between a line connecting the initial position and the center of the circle shape and a reference line; then extract a touch position, detected by the touch structure, in the first sliding region every third time period, and use the touch position as a subsequent position (x1, y1); calculate a subsequent angle w1 between a line connecting the subsequent position and the center of the circle and a reference line; calculate an angle difference between the subsequent angle w1 and the initial angle w, in the case that the angle difference is greater than the preset angle value, determine that the touch operation is in a rotary mode. It should be noted that the preset angle value mentioned above can be set according to the actual situation, and may be, for example, 30 degrees, 15 degrees, 45 degrees, etc.

Subsequently, the control module calls the high-frequency driving voltage corresponding to the rotary mode in the pre-stored driving voltage library according to the determined rotary mode, and outputs the high-frequency driving voltage to the piezoelectric actuator to allow the piezoelectric actuator to drive the display panel to generate a high-frequency vibration, thereby allowing the user to generate the tactile effect corresponding to a knob. For example, the value of the frequency of the high-frequency driving voltage mentioned above ranges from 20 kHz to 30 kHz. **In** the case that the control module detects that the touch position is outside the second sliding area, the control module determines that the rotary mode ends and can stop outputting the high-frequency driving voltage to the piezoelectric actuator, and switch to outputting the low-frequency driving voltage corresponding to the normal pressing mode.

For example, the value of the high-frequency driving voltage mentioned above ranges from 80V to 160V, such as 100V. Of course, the embodiments of the present disclosure include but are not limited thereto, the value range of the driving voltage mentioned above is determined according to the working voltage of the piezoelectric actuator. Therefore, when different piezoelectric actuators are used, the value range of the driving voltage mentioned above can be changed according to the actual situation.

Therefore, the control module can determine whether the touch operation is in a sliding mode by calculating the angle difference between the subsequent angle w1, between the line connecting the subsequent position and the center of the circle shape and the reference line, and the initial angle w. In addition, the control module can also perform the above determination process only in the second sliding region by dividing the second sliding region on the display panel, thereby reducing misjudgment while providing corresponding functions.

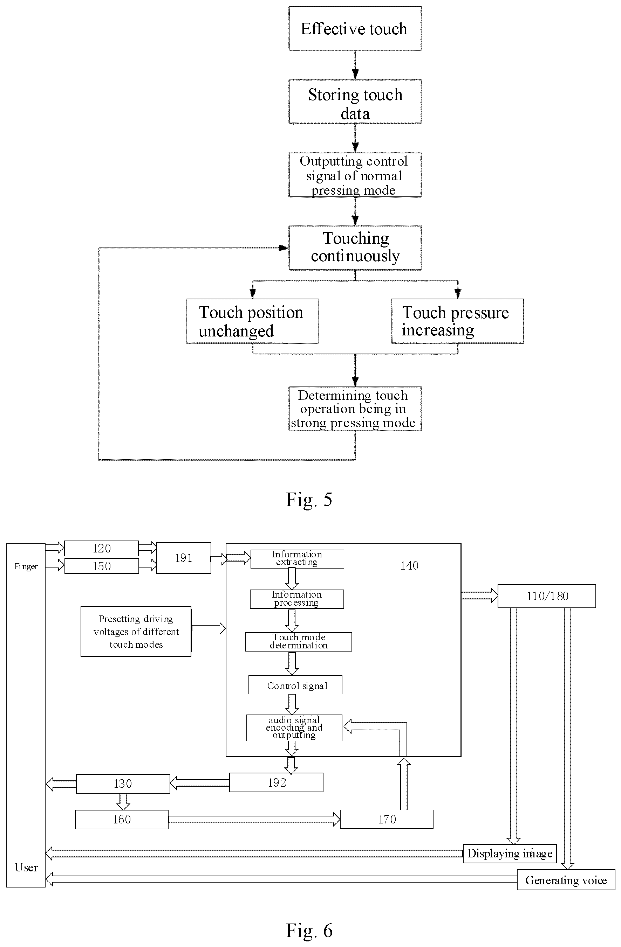

Fig. 5 is a flowchart of another tactile reproduction system determining a touch mode provided by an embodiment of the present disclosure. As illustrated by Fig. 5, when the user forcefully touches and presses, the touch structure and the first pressure sensor at the user's touch position continuously output the effective touch position and touch pressure. The data processor extracts the above touch position and touch pressure in real time and compares them with the initial stored data. In the case that the touch position remains unchanged and the touch pressure exceeds the first preset pressure, the data processor determines that the touch operation is in a strong pressing mode. It should be noted that the first preset pressure mentioned above is greater than the first preset pressure threshold mentioned above.

In addition, the data processor can also determine the difference between the touch pressure and the first preset pressure within different threshold ranges to determine which level the strong pressing mode is in.

For example, the different threshold ranges mentioned above, from small to large, may include a first threshold range A, a second threshold range B, and a third threshold range C; in the case that the difference between the touch pressure and the first preset pressure is within the first threshold range A, it can be determined that the strong pressing mode is in the strong pressing mode of level A; in the case that the difference between the touch pressure and the first preset pressure is within the second threshold range B, it can be determined that the strong pressing mode is in the strong pressing mode of level B; in the case that the difference between the touch pressure and the first preset pressure is within the third threshold range C, it can be determined that the strong pressing mode is in the strong pressing mode of level C.

Then, the data processor outputs a control signal corresponding to the strong pressing mode to the FPGA, the FPGA calls the driving voltage corresponding to the strong pressing mode in the pre-stored driving voltage library according to the control signal, and outputs the driving voltage to the piezoelectric actuator to allow the piezoelectric actuator to drive the display panel to vibrate, thereby enabling the user to generate the corresponding tactile effect. It should be noted that the above strong pressing mode can correspond to the touch mode such as charging and long pressing in games.

In some examples, it is also possible to determine whether the touch operation is in a strong pressing mode by dividing a pressing region. In this case, the control module is configured to: divide the pressing region on the display panel; extract the touch position detected by the touch structure and determine whether the touch position is in the pressing region; if the touch position is in the pressing region and the touch pressure is greater than the preset pressure value, determine that the touch operation is in a strong pressing mode.

Subsequently, the control module calls the low-frequency driving voltage corresponding to the rotary mode in the pre-stored driving voltage library according to the determined strong pressing mode, and outputs the low-frequency driving voltage to the piezoelectric actuator to allow the display panel to generate a low-frequency vibration, thereby achieving the tactile effect corresponding to a button. For example, the value of the frequency of the low-frequency driving voltage mentioned above ranges from 200 Hz to 300 Hz. If the control module detects that the touch position is outside the pressing region, the control module determines that the strong pressing mode ends.

In some examples, the preset pressure value includes a plurality of pressure levels of different magnitudes, and the control module is configured to determine a magnitude relationship between the touch pressure and the plurality of pressure levels to determine the level of the strong pressing mode.

It is worth noting that, in addition to the above application scenarios, the embodiments of the present disclosure can also determine different operating modes according to the changing speed of the touch position and other changes, and generate different tactile reproduction effects accordingly, thereby further improving the authenticity of human-computer interaction and the user's immersive experience.

Fig. 6 is a schematic diagram of another tactile reproduction system provided by an embodiment of the present disclosure. As illustrated by Fig. 6, unlike the tactile reproduction system shown in Fig. 1, the tactile reproduction system may be a tactile reproduction system according to an Android development board. The control module 140 may be an Android development board, to extract the touch position detected by the touch structure, determine the touch mode of the touch operation according to the change of the touch position, and output different driving voltages to the piezoelectric actuator according to the touch mode to achieve different tactile reproduction effects.

For example, as illustrated by Fig. 6, the control module 140 can encode and output an audio signal by controlling an audio module, and then amplify and load the audio signal to a piezoelectric actuator to generate tactile reproduction effects.

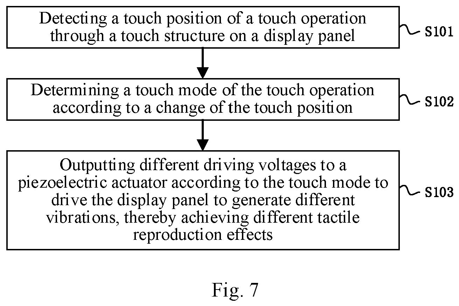

The embodiments of the present disclosure further provide a tactile reproduction method. Fig. 7 is a flowchart of a tactile reproduction method provided by an embodiment of the present disclosure. As illustrated by Fig. 7, the tactile reproduction method includes steps S101 to S103.

Step S101: detecting a touch position of a touch operation through a touch structure on a display panel.

Step S102: determining a touch mode of the touch operation according to a change of the touch position.

Step S103: outputting different driving voltages to a piezoelectric actuator according to the touch mode to drive the display panel to generate different vibrations, thereby achieving different tactile reproduction effects.

In the tactile reproduction method provided by the embodiments of the present disclosure, by extracting the touch position detected by the touch structure, the touch mode of the touch operation is determined according to the change of the touch position, then, different tactile reproduction effects are achieved according to the touch mode, thereby improving the authenticity of human-computer interaction and the user's immersive experience.

In some example, the above tactile reproduction method further includes: detecting a touch pressure of the touch operation through a first pressure sensor on the display panel, and the determining the touch mode of the touch operation through the change of the touch position includes: determining the touch mode according to the change of the touch position and the touch pressure. Therefore, the tactile reproduction method can recognize more types of touch modes through the touch pressure, thereby providing a richer tactile reproduction effect.

In some examples, the tactile reproduction method further includes: comparing a magnitude of the touch pressure with a preset pressure threshold to determine whether the touch operation is a false touch. Therefore, the visual reproduction method can determine whether the user's touch operation is an effective touch and avoid a false touch.

In some examples, the above touch structure may be a capacitive touch structure. Of course, the embodiments of the present disclosure include but are not limited thereto, and the above touch structure may also include other types of touch structures.

In some examples, the above tactile reproduction method further includes: detecting the vibration of the display panel through a second pressure sensor on the display panel, and converting the vibration into a vibration signal; compare the vibration signal with a reference signal, and change the driving voltage according to a comparison result. For example, the above reference signal is a standard vibration signal of the tactile reproduction effect corresponding to the touch mode. Therefore, the tactile reproduction method can form a closed-loop feedback through a second pressure sensor and a closed-loop feedback controller to accurately control the tactile reproduction effect, thereby improving the user experience. It should be noted that the pressure of the touch operation will cause the resonance frequency point of the vibration to shift, so that the tactile reproduction effect can be corrected through closed-loop feedback.

In some examples, the above tactile reproduction method further includes: outputting a display signal to the display panel according to the touch mode to increase a visual reproduction effect. Therefore, the tactile reproduction method can further improve the user experience.

In some examples, the above tactile reproduction method further includes: outputting an audio signal to a speaker according to the touch mode to increase an auditory reproduction effect. Therefore, the tactile reproduction method can further improve the user experience.

In some examples, in the above tactile reproduction method, outputting different driving voltages to the piezoelectric actuator according to the touch mode to generate different vibrations includes: generating a control signal according to the touch mode through a data processor, and outputting the control signal to a field programmable logic gate array; the programmable logic gate array calls the driving voltages corresponding to different tactile reproduction effects in a pre-stored driving voltage library according to the control signal, and outputs the driving voltages to the piezoelectric actuator to achieve different tactile reproduction effects. Therefore, the tactile reproduction method can improve processing efficiency, reduce latency, and improve user experience by combining the data processor and the field programmable logic gate array.

For example, the data processor may be a central processing unit (CPU). Of course, the embodiments of the present disclosure include but are not limited thereto.

In some examples, in the above tactile reproduction method, outputting different driving voltages to the piezoelectric actuator according to the touch mode to generate different vibrations includes: generating a control signal according to the touch mode through a data processor, and outputting the control signal to a field programmable logic gate array; the programmable logic gate array calls driving voltages corresponding to different tactile reproduction effects in a pre-stored driving voltage library according to the control signal, and outputs the driving voltages to the piezoelectric actuator to achieve different tactile reproduction effects. Therefore, the tactile reproduction method can improve operational efficiency, reduce latency, and improve user experience by the pre-stored driving voltage library.

In some examples, the tactile reproduction method further includes: converting an analog signal output by the touch structure into a digital signal through an analog to digital converter; converting the driving voltage output by the field programmable logic gate array to an analog signal through a digital to analog converter; and amplify the analog signal through an operational amplifier.

In some examples, the tactile reproduction method can determine the touch mode through the change of the touch position and the touch pressure. **In** the following, the determination process will be illustrated in detail through several examples. It should be noted that the touch modes in the embodiments of the present disclosure are all according to effective touches.

In some examples, in the case that a trajectory formed by the touch position is detected as a straight line and the change of the touch pressure is within a first preset range, it is determined that the touch operation is in a sliding mode. It should be noted that the first preset range can be set according to the actual situation.

For example, in the case that the user continuously slides and touches, the touch structure and the first pressure sensor at the user's touch position continuously output the effective touch position and touch pressure, the data processor extracts the above touch position and touch pressure in real time and compares them with the initial stored data. In the case that a trajectory formed by the touch position is detected to be a straight line or roughly a straight line, and the change of the touch pressure is within a first preset range, the data processor determines that the touch operation is in a sliding mode.

Then, according to the above determination result, the data processor can output a control signal corresponding to the sliding mode to the FPGA, the FPGA calls a high-frequency excitation signal (i.e. high-frequency driving voltage) corresponding to the sliding mode in the pre-stored driving voltage library according to the control signal, and outputs the high-frequency excitation signal to the piezoelectric actuator to allow the piezoelectric actuator to drive the display panel to vibrate, thereby enabling the user to generate the tactile effect corresponding to a sliding bar. It should be noted that the above sliding mode may be a sliding mode corresponding to a progress bar or the like.

In some examples, determining the touch mode according to the change of the touch position and touch pressure includes: dividing a first sliding region on the display panel, in which the first sliding region may be in a stripe shape or a rectangle shape; storing a first touch position, detected by the touch structure, in the first sliding region and using the first touch position as an initial position (x, y); then extracting a touch position, detected by the touch structure, in the first sliding region every first time period, and using the touch position as a subsequent position (x1, y1); calculating a horizontal offset between the subsequent position (x1, y1) and the initial position (x, y); in the case that the horizontal offset is less than a preset horizontal offset, determining that the touch operation is in a sliding mode. It should be noted that the above sliding mode may be a sliding mode corresponding to a progress bar or the like.

In some examples, the outputting different driving voltages to the piezoelectric actuator according to the touch mode to drive the display panel to generate different vibrations, thereby achieving different tactile reproduction effects includes: calling a high-frequency driving voltage corresponding to the sliding mode in a pre-stored driving voltage library according to the determined sliding mode, and outputting the high-frequency driving voltage to the piezoelectric actuator to allow the piezoelectric actuator to drive the display panel to generate a high-frequency vibration, thereby enabling the user to generate a tactile effect corresponding to a sliding bar. For example, the value of the frequency of the high-frequency driving voltage mentioned above ranges from 20 kHz to 30 kHz.

In the case that the touch position is detected outside the first sliding region, it is determined that the sliding mode ends, and the high-frequency driving voltage output to the piezoelectric actuator can be stopped, and it is switched to outputting the low-frequency driving voltage corresponding to the normal pressing mode.

For example, the value of the high-frequency driving voltage mentioned above ranges from 80V to160V, such as 100V. Of course, the embodiments of the present disclosure include but are not limited thereto, the value range of the driving voltage mentioned above is determined according to the working voltage of the piezoelectric actuator. Therefore, when different piezoelectric actuators are used, the value range of the driving voltage mentioned above can be changed according to the actual situation.

Therefore, the tactile reproduction method can determine whether the trajectory of the touch operation is a straight line by determining the horizontal offset between the subsequent position and the initial position, thereby determining whether the touch operation is in a sliding mode. In addition, the tactile reproduction method can also perform the above determination process only in the first sliding region by dividing the first sliding region on the display panel, thereby reducing misjudgments while providing corresponding functions.

It should be noted that the initial position and subsequent position mentioned above can be characterized by the coordinates on the display panel, and the horizontal offset can be obtained by calculating the coordinates of the initial position and subsequent position through a function. In addition, the preset horizontal offset mentioned above can be set according to the situation, for example, it may be smaller than the width of the first sliding region.

In some examples, determining the touch mode according to the change of the touch position and touch pressure includes: dividing a first sliding region on the display panel; dividing the first sliding region into a plurality of sub sliding regions sequentially arranged, such as A1, A2, A3, A4; storing a first touch position, detected by the touch structure, in the first sliding region and using the first touch position as the initial position; then extracting a touch position, detected by the touch structure, in the first sliding region every second time period, and using the touch position as the subsequent position; determine whether the sub sliding region where the subsequent position is located is adjacent to the sub sliding region where the initial position is located. If so, determine that the touch operation is in a sliding mode. For example, if the initial position is in A2 and the subsequent position is in A1 or A3, it can be determined that the current touch operation is in a sliding mode.

In some examples, the outputting different driving voltages to the piezoelectric actuator according to the touch mode to drive the display panel to generate different vibrations, thereby achieving different tactile reproduction effects includes: calling the high-frequency driving voltage corresponding to the sliding mode in the pre-stored driving voltage library according to the determined sliding mode, and outputting the high-frequency driving voltage to the piezoelectric actuator to allow the piezoelectric actuator to drive the display panel to generate a high-frequency vibration, thereby enabling the user to generate the tactile effect corresponding to a sliding bar. For example, the value of the frequency of the high-frequency driving voltage mentioned above ranges from 20 kHz to 30 kHz.

If the touch position is detected outside the first sliding region, it is determined that the sliding mode ends, and the high-frequency driving voltage output to the piezoelectric actuator can be stopped, and it is switched to outputting the low-frequency driving voltage corresponding to the normal pressing mode.

For example, the value of the high-frequency driving voltage value mentioned above ranges from 80V to 160V, such as 100V. Of course, the embodiments of the present disclosure include but are not limited thereto, the value range of the driving voltage mentioned above is determined according to the working voltage of the piezoelectric actuator. Therefore, when different piezoelectric actuators are used, the value range of the driving voltage mentioned above can be changed according to the actual situation.

Therefore, the tactile reproduction method can determine whether the touch operation is in the sliding mode by determining which sub sliding regions, in the first sliding region, the subsequent position and the initial position are in. In addition, the tactile reproduction method can also perform the above determination process only in the first sliding region by dividing the first sliding region on the display panel, thereby reducing misjudgment while providing corresponding functions.

In some examples, determining the touch mode according to the change of the touch position and touch pressure includes: in the case that the trajectory formed by the touch position is detected as an arc line, and the change of the touch pressure is within the second preset range, determining that the touch operation is in a rotary mode. For example, the second preset range and the first preset range mentioned above can be the same. Of course, the embodiments of the present disclosure include but are not limited thereto, and the second preset range and the first preset range mentioned above may also be different.

For example, when the user rotates and slides, the touch structure and the first pressure sensor at the user's touch position continuously output the effective touch position and touch pressure. The data processor extracts the above touch position and touch pressure in real time and compares them with the initial stored data. In the case that the trajectory formed by the touch position is detected as an arc line (the arc line in the embodiments of the present disclosure may include a circle), and the change of the touch pressure is within the second preset range, the data processor determines that the touch operation is in a rotary mode.

Then, according to the above determination result, the data processor can output a control signal corresponding to the rotary mode to the FPGA, the FPGA calls the driving voltage corresponding to the rotary mode in the pre-stored driving voltage library according to the control signal, and outputs the driving voltage to the piezoelectric actuator to allow the piezoelectric actuator to drive the display panel to vibrate, thereby enabling the user to generate the corresponding tactile effect. It should be noted that the rotary mode may correspond to the touch mode such as rotating a button.

In some examples, determining the touch mode according to the change of the touch position and touch pressure includes: dividing a second sliding region on the display panel, in which the second sliding region is in a circle shape which includes a center; storing a first touch position, detected by the touch structure, in the second sliding region and using the first touch position as an initial position (x, y); calculating an initial angle w between a line connecting the initial position and the center of the circle shape and a reference line; then extracting a touch position, detected by the touch structure, in the second sliding region every third time period, and using the touch position as a subsequent position (x1, y1); calculating a subsequent angle w1 between a line connecting the subsequent position and the center of the circle and a reference line; calculating an angle difference between the subsequent angle w1 and the initial angle w, in the case that the angle difference is greater than the preset angle value, determining that the touch operation is in a rotary mode. It should be noted that the preset angle value mentioned above can be set according to the actual situation, such as 30 degrees, 15 degrees, 45 degrees, etc.

In some example, the outputting different driving voltages to the piezoelectric actuator according to the touch mode to drive the display panel to generate different vibrations, thereby achieving different tactile reproduction effects includes: calling the high-frequency driving voltage corresponding to the rotary mode in the pre-stored driving voltage library according to the determined rotary mode, and outputting the high-frequency driving voltage to the piezoelectric actuator to allow the piezoelectric actuator to drive the display panel to generate a high-frequency vibration, thereby allowing the user to generate the tactile effect corresponding to a knob. For example, the value of the frequency of the high-frequency driving voltage mentioned above ranges from 20 kHz to 30 kHz. In the case that the control module detects that the touch position is outside the second sliding area, the control module determines that the rotary mode ends and can stop outputting the high-frequency driving voltage to the piezoelectric actuator, and switch to outputting the low-frequency driving voltage corresponding to the normal pressing mode.

For example, the value of the high-frequency driving voltage value mentioned above ranges from 80V to 160V, such as 100V. Of course, the embodiments of the present disclosure include but are not limited thereto, the value range of the driving voltage mentioned above is determined according to the working voltage of the piezoelectric actuator. Therefore, when different piezoelectric actuators are used, the value range of the driving voltage mentioned above can be changed according to the actual situation.

Therefore, the tactile reproduction method can determine whether the touch operation is in a sliding mode by calculating the angle difference between the subsequent angle w1, between the line connecting the subsequent position and the center of the circle shape and the reference line, and the initial angle w. In addition, the tactile reproduction method can also perform the above determination process only in the second sliding region by dividing the second sliding region on the display panel, thereby reducing misjudgment while providing corresponding functions.

In some examples, determining the touch mode according to the change of the touch position and touch pressure includes: dividing a pressing region on the display panel; extracting a touch position detected by the touch structure and determining whether the touch position is in the pressing region; if the touch position is in the pressing region and the touch pressure is greater than a preset pressure value, determining that the touch operation is in a strong pressing mode.

In some example, the outputting different driving voltages to the piezoelectric actuator according to the touch mode to drive the display panel to generate different vibrations, thereby achieving different tactile reproduction effects includes: calling the low-frequency driving voltage corresponding to the rotary mode in the pre-stored driving voltage library according to the determined strong pressing mode, and outputting the low-frequency driving voltage to the piezoelectric actuator to allow the display panel to generate a low-frequency vibration, thereby achieving the tactile effect corresponding to a button. For example, the value of the frequency of the low-frequency driving voltage mentioned above ranges from 200 Hz to 300 Hz. If the control module detects that the touch position is outside the pressing region, the control module determines that the strong pressing mode ends.

In some example, the preset pressure value includes a plurality of pressure levels of different magnitudes, and the control module is configured to determine a magnitude relationship between the touch pressure and the plurality of pressure levels to determine a level of the strong pressing mode.

It is worth noting that in addition to the above application scenarios, the embodiments of the present disclosure can determine different operating modes according to the change speed of the touch position and other changes, and generate different tactile reproduction effects accordingly, thereby further improving the authenticity of human-computer interaction and the user's immersive experience.

The embodiments of the present disclosure further provide a storage medium on which a computer program is stored. When the computer program is run by a processor, the steps of the tactile reproduction method described above are executed. The storage medium may include the ROM, RAM, disk, or optical disc, etc. The storage medium may also include a non-volatile memory or a non-transient memory, etc.

The following points need to be explained:
(1) In the drawings of the embodiment of the present disclosure, only the structure related to the embodiment of the present disclosure is involved, and other structures can refer to the general design.
(2) Features in the same embodiment and different embodiments of the present disclosure can be combined with each other without conflict.

The above is only the specific embodiment of the present disclosure, but the protection scope of the present disclosure is not limited thereto. Any person familiar with the technical field can easily think of changes or substitutions within the technical scope disclosed in the present disclosure, and they should be included in the protection scope of the present disclosure. Therefore, the scope of protection of the present disclosure should be based on the scope of protection of the claims.

## Claims

1. A tactile reproduction system, comprising:
a display panel;
a touch structure, on the display panel and configured to detect a touch position of a touch operation;
a piezoelectric actuator, on the display panel; and
a control module, respectively connected to the display panel, the touch structure, and the piezoelectric actuator in communication,
wherein the control module is configured to extract the touch position detected by the touch structure, determine a touch mode of the touch operation according to a change of the touch position, and output different driving voltages to the piezoelectric actuator according to the touch mode to drive the display panel to generate different vibrations, thereby achieving different tactile reproduction effects.

2. The tactile reproduction system according to claim 1, further comprising:
a first pressure sensor, on the display panel and configured to detect a touch pressure of the touch operation,
wherein the control module is further connected to the first pressure sensor in communication and configured to extract the touch pressure detected by the first pressure sensor, and determine the touch mode of the touch operation according to the change of the touch position and the touch pressure.

3. The tactile reproduction system according to claim 2, wherein the control module is further configured to compare a magnitude of the touch pressure with a preset pressure threshold to determine whether the touch operation is a false touch.

4. The tactile reproduction system according to claim 2, wherein in a case that the control module detects that a trajectory formed by the touch position is a straight line, and a change of the touch pressure is within a first preset range, the control module determines that the touch operation is in a sliding mode.

5. The tactile reproduction system according to any one of claims 1-4, wherein the control module is configured to: divide a first sliding region on the display panel; store a first touch position, detected by the touch structure, in the first sliding region, and use the first touch position as an initial position, then extract a touch position, detected by the touch structure, in the first sliding region every first time period, and use the touch position as a subsequent position; calculate a horizontal offset between the subsequent position and the initial position, and in a case that the horizontal offset is less than a preset horizontal offset, determine that the touch operation is in a sliding mode.

6. The tactile reproduction system according to any one of claims 1-4, wherein the control module is configured to: divide a first sliding region on the display panel; divide the first sliding region into a plurality of sub sliding regions sequentially arranged; store a first touch position, detected by the touch structure, in the first sliding region, and use the first touch position as an initial position; then extract a touch position, detected by the touch structure, in the first sliding region every second time period, and use the touch position as a subsequent position; determine whether one of plurality of sub sliding regions where the subsequent position is located is adjacent to one of plurality of sub sliding regions where the initial position is located, if so, determine that the touch operation is in a sliding mode.

7. The tactile reproduction system according to claim 5 or 6, wherein the control module is configured to determine that the sliding mode ends after detecting that the touch position is outside the first sliding region.

8. The tactile reproduction system according to any one of claims 4-7, wherein the control module outputs a high-frequency driving voltage to the piezoelectric actuator according to the sliding mode to allow the display panel to generate a high-frequency vibration, thereby achieving a tactile effect corresponding to a sliding bar, a value of a frequency of the high-frequency driving voltage ranges from 20 kHz to 30 kHz.

9. The tactile reproduction system according to claim 2, wherein in a case that the control module detects that a trajectory formed by the touch position is an arc line, and a change of the touch pressure is within a second preset range, the control module determines that the touch operation is in a rotary mode.

10. The tactile reproduction system according to claim 1 or 9, wherein the control module is configured to: divide a second sliding region on the display panel, wherein the second sliding region is in a circle shape which comprises a center; store a first touch position, detected by the touch structure, in the second sliding region, and use the first touch position as an initial position, calculate an initial angle between a line connecting the initial position and the center of the circle shape and a reference line; then extract a touch position, detected by the touch structure, in the first sliding region every third time period, and use the touch position as a subsequent position; calculate a subsequent angle between a line connecting the subsequent position and the center of the circle shape and a reference line; calculate an angle difference between the subsequent angle and the initial angle, in a case that the angle difference is greater than a preset angle value, determine that the touch operation is in a rotary mode.

11. The tactile reproduction system according to claim 10, wherein the control module is configured to determine that the rotary mode ends after detecting that the touch position is outside the second sliding region.

12. The tactile reproduction system according to any one of claims 9-11, wherein the control module outputs a high-frequency driving voltage to the piezoelectric actuator according to the sliding mode to allow the display panel to generate a high-frequency vibration, thereby achieving a tactile effect corresponding to a knob, a value of a frequency of the high-frequency driving voltage ranges from 20 kHz to 30 kHz.

13. The tactile reproduction system according to claim 2, wherein the control module is configured to divide a pressing region on the display panel; extract the touch position detected by the touch structure and determine whether the touch position is in the pressing region; if the touch position is in the pressing region and the touch pressure is greater than a preset pressure value, determine that the touch operation is in a strong pressing mode.

14. The tactile reproduction system according to claim 13, wherein the preset pressure value includes a plurality of pressure levels of different magnitudes, and the control module is configured to determine a magnitude relationship between the touch pressure and the plurality of pressure levels to determine a level of the strong pressing mode.

15. The tactile reproduction system according to claim 13 or 14, wherein the control module outputs a low-frequency driving voltage to the piezoelectric actuator according to the sliding mode to allow the display panel to generate a low-frequency vibration, thereby achieving a tactile effect corresponding to a button, a value of a frequency of the low-frequency driving voltage ranges 200 Hz to 300 Hz.

16. The tactile reproduction system according to any one of claims 1-15, further comprising:
a second pressure sensor, on the display panel and configured to detect a vibration of the display panel and convert the vibration into a vibration signal; and
a closed-loop feedback controller, respectively connected to the second pressure sensor and the control module in communication,
wherein the closed-loop feedback controller is configured to extract the vibration signal detected by the second pressure sensor, compare the vibration signal with a reference signal, and feedback a comparison result to the control module to change a driving voltage, the reference signal is a standard vibration signal of a tactile reproduction effect corresponding to the touch mode.

17. The tactile reproduction system according to any one of claims 1-15, wherein the control module is further configured to output a display signal to the display panel according to the touch mode to increase a visual reproduction effect.

18. The tactile reproduction system according to any one of claims 1-15, further comprising:
a speaker,
wherein the control module is connected to the speaker in communication, and the control module is further configured to output an audio signal to the speaker according to the touch mode to increase an auditory reproduction effect.

19. The tactile reproduction system according to any one of claims 1-15, wherein the control module comprises:
a data processor; and
a field programmable logic gate array,
wherein the data processor is configured to extract the touch position detected by the touch structure, determine the touch mode according to the touch position, and output a control signal to the field programmable logic gate array according to the touch mode;
the field programmable logic gate array calls driving voltages corresponding to the different tactile reproduction effects in a pre-stored driving voltage library according to the control signal, and outputs the driving voltages to the piezoelectric actuator to achieve the different tactile reproduction effects.

20. The tactile reproduction system according to claim 19, further comprising:
an analog to digital converter, comprising an input terminal and an output terminal;
an operational amplifier, comprising an input terminal and an output terminal; and
a digital to analog converter, comprising an input terminal and an output terminal,
wherein the input terminal of the analog to digital converter is connected to the touch structure in communication, and the output terminal of the analog to digital converter is connected to the data processor in communication;
the input terminal of the digital to analog converter is connected to the field programmable logic gate array, the output terminal of the digital to analog converter is connected to the input terminal of the operational amplifier, and the output terminal of the operational amplifier is connected to the piezoelectric actuator.

21. A tactile reproduction method, comprising:
detecting a touch position of a touch operation through a touch structure on a display panel;
determining a touch mode of the touch operation according to a change of the touch position; and
outputting different driving voltages to a piezoelectric actuator according to the touch mode to drive the display panel to generate different vibrations, thereby achieving different tactile reproduction effects.

22. The tactile reproduction method according to claim 21, further comprising:
detecting a touch pressure of the touch operation through a first pressure sensor on the display panel,
wherein the determining the touch mode of the touch operation through the change of the touch position comprises: determining the touch mode according to the change of the touch position and the touch pressure.

23. The tactile reproduction method according to claim 22, wherein the determining the touch mode according to the change of the touch position and the touch pressure comprises:
in a case that a trajectory formed by the touch position is a straight line and a change of the touch pressure is within a first preset range, determining that the touch operation is in a sliding mode.

24. The tactile reproduction method according to claim 23, wherein the determining the touch mode according to the change of the touch position and the touch pressure comprises:
dividing a first sliding region on the display panel;
storing a first touch position, detected by the touch structure, in the first sliding region, and using the first touch position as an initial position;
extracting a touch position, detected by the touch structure, in the first sliding region every first time period, and using the touch position as a subsequent position; and
calculating a horizontal offset between the subsequent position and the initial position, and in a case that the horizontal offset is less than a preset horizontal offset, determining that the touch operation is in a sliding mode.

25. The tactile reproduction method according to claim 23, wherein the determining the touch mode according to the change of the touch position and the touch pressure comprises:
dividing a first sliding region on the display panel;
dividing the first sliding region into a plurality of sub sliding regions sequentially arranged;
storing a first touch position, detected by the touch structure, in the first sliding region, and using the first touch position as an initial position;
extracting a touch position, detected by the touch structure, in the first sliding region every second time period, and using the touch position as a subsequent position;
determining whether one of the plurality of sub sliding regions where the subsequent position is located is adjacent to one of the plurality of sub sliding regions where the initial position is located, if so, determining that the touch operation is in a sliding mode.

26. The tactile reproduction method according to claim 24 or 25, further comprising:
determining that the sliding mode ends after detecting that the touch position is outside the first sliding region.

27. The tactile reproduction method according to any one of claims 23-26, wherein the outputting different driving voltages to the piezoelectric actuator according to the touch mode to drive the display panel to generate different vibrations, thereby achieving different tactile reproduction effects comprises:
according to the sliding mode, outputting a high-frequency driving voltage to the piezoelectric actuator to allow the display panel to generate a high-frequency vibration, thereby achieving a tactile effect corresponding to a sliding bar, wherein a value of a frequency of the high-frequency driving voltage ranges 20 kHz to 30 kHz.

28. The tactile reproduction method according to claim 22, wherein the determining the touch mode according to the change of the touch position and the touch pressure comprises:
in a case that a trajectory formed by the touch position is detected as an arc line, and a change of the touch pressure is within a second preset range, determining that the touch operation is in a rotary mode.

29. The tactile reproduction method according to claim 28, wherein the determining the touch mode according to the change of the touch position and the touch pressure comprises:
dividing a second sliding region on the display panel, wherein the second sliding region is in a circle shape which comprises a center;
storing a first touch position, detected by the touch structure, in the second sliding region, and using the first touch position as an initial position;
calculating an initial angle between a line connecting the initial position and the center of the circle shape and a reference line;
extracting a touch position, detected by the touch structure, in the first sliding region every third time period, and using the touch position as a subsequent position;
calculating a subsequent angle between a line connecting the subsequent position and the center of the circle shape and a reference line; calculating an angle difference between the subsequent angle and the initial angle, in a case that the angle difference is greater than a preset angle value, determining that the touch operation is in a rotary mode.

30. The tactile reproduction method according to claim 29, further comprising:
determining that the rotary mode ends after detecting that the touch position is outside the second sliding region.

31. The tactile reproduction method according to any one of claims 28-30, wherein the outputting different driving voltages to the piezoelectric actuator according to the touch mode to drive the display panel to generate different vibrations, thereby achieving different tactile reproduction effects comprises:
according to the sliding mode, outputting a high-frequency driving voltage to the piezoelectric actuator to allow the display panel to generate a high-frequency vibration, thereby achieving a tactile effect corresponding to a knob, a value of a frequency of the high-frequency driving voltage ranges from 20 kHz to 30 kHz.

32. The tactile reproduction method according to claim 22, wherein the determining the touch mode according to the change of the touch position and the touch pressure comprises:
dividing a pressing region on the display panel;
extracting the touch position detected by the touch structure and determining whether the touch position is in the pressing region;
if the touch position is in the pressing region and the touch pressure is greater than a preset pressure value, determining that the touch operation is in a strong pressing mode.

33. The tactile reproduction method according to claim 32, wherein the preset pressure value includes a plurality of pressure levels of different magnitudes, and the control module is configured to determine a magnitude relationship between the touch pressure and the plurality of pressure levels to determine a level of the strong pressing mode.

34. The tactile reproduction method according to claim 32 or 33, wherein the outputting different driving voltages to the piezoelectric actuator according to the touch mode to drive the display panel to generate different vibrations, thereby achieving different tactile reproduction effects comprises:
according to the sliding mode, outputting a low-frequency driving voltage to the piezoelectric actuator to allow the display panel to generate a low-frequency vibration, thereby achieving a tactile effect corresponding to a button, wherein a value of a frequency of the low-frequency driving voltage ranges from 200 Hz to 300 Hz.

35. The tactile reproduction method according to any one of claims 21-34, further comprising:
compare a magnitude of the touch pressure with a preset pressure threshold to determine whether the touch operation is a false touch.

36. The tactile reproduction method according to any one of claims 21-34, further comprising:
detecting a vibration of the display panel and converting the vibration into a vibration signal by a second pressure sensor on the display panel; and
comparing the vibration signal with a reference signal, and changing a driving voltage according to a comparison result,
wherein the reference signal is a standard vibration signal of a tactile reproduction effect corresponding to the touch mode.

37. The tactile reproduction method according to any one of claims 21-34, further comprising:
outputting a display signal to the display panel according to the touch mode to increase a visual reproduction effect.

38. The tactile reproduction method according to any one of claims 21-34, further comprising:
outputting an audio signal to a speaker according to the touch mode to increase an auditory reproduction effect.
